# EUROPEAN PATENT APPLICATION

(11) **EP 2 524 596 A1**
(43) Date of publication of application: **21.11.2012**
(21) Application number: 11166627.7
(22) Date of filing: 18.05.2011
(51) Int. Cl.: A01N 25/00, A01N 43/40, A01N 43/56, A01P 3/00

(54) **Seed treatment uses**

(71) Applicant: BASF SE, 67056 Ludwigshafen (DE)
(72) Inventor: The designation of the inventor has not yet been filed

(57) **Abstract**

The invention relates to method for protecting plants after germination from the attack of foliar phytopathogenic fungi, which comprises treating the seeds with an effective amount of a pesticide selected from penflufen, fluopyram, sedaxane or penthiopyrad.

## Description

The invention relates to method for protecting plants after germination from the attack of foliar phytopathogenic fungi, which comprises treating the seeds with an effective amount of a pesticide selected from penflufen, fluopyram, sedaxane or penthiopyrad.

The invention further relates to the use of a pesticide selected from penflufen, fluopyram, sedaxane or penthiopyrad for treating seed for protecting the plants which are to grow from the seed after germination from the attack of foliar phytopathogenic fungi.

In agriculture, protection of seed is a crucial step, as by this treatment, not only protection at a very early stage is efficiently achieved, but also from an environmental point of view, the respective actives are applied directly at the site of action, whereas, in foliar application, parts of the actives are applied just at the soil and not at the plant. In most cases, however, after emergence of the seedling, additional subsequent foliar spraying of pesticides is required for many cultivated plants.

WO 2007128756 A1 describes the effect of specific arylcarboxylic acid biphenylamides, which do not only provide protection of the seed, but which provides also protection of the plant emerging from the seed for after germination.

However, there is a need in the art to find more pesticides also suitable for this specific purpose.

Surprisingly, the purpose could be achieved by the use of a pesticide selected from penflufen, fluopyram, sedaxane or penthiopyrad for protecting the plants which are to grow from the seed after germination from the attack of foliar phytopathogenic fungi by application of the aforementioned pesticides to the seed of this plants.

Thus, the present invention therefore relates to a method for protecting plants after germination from the attack of foliar phytopathogenic fungi, which comprises treating the seeds with an effective amount of a pesticide selected from penflufen, fluopyram, sedaxane or penthiopyrad.

The invention moreover relates to the use of a pesticide selected from penflufen, fluopyram, sedaxane or penthiopyrad for treating seed for protecting the plants which are to grow from the seed after germination from the attack of foliar phytopathogenic fungi.

More preferably, the present invention therefore relates to a method for protecting plants after germination from the attack of foliar phytopathogenic fungi, which comprises treating the seeds with an effective amount of a pesticide selected from fluopyram.

Preferably, the method and the use according to the invention serve for protecting plants after emergence, specifically for protecting plants when they are in the growth stage BBCH 09 or higher (according to the BBCH extended scale; German Federal Biological Research Centre for Agriculture and Forestry; see www.bba.de/veroeff/bbch/bbcheng.pdf). This object is achieved by treating the seeds from which the plants are to grow as described above and in the following.

Fluopyram, penflufen, sedaxane or penthiopyrad as well as their pesticidal action and methods for producing them are generally known. For instance, they can be found in the e-Pesticide Manual V5.1, ISBN 978 1 901396 84 3 among other publications.

As used herein, the term "seed" denotes any resting stage of a plant that is physically detached from the vegetative stage of a plant and/or may be stored for prolonged periods of time and/or can be used to re-grow another plant individual of the same species.

Here, the term "resting" refers to a state wherein the plant retains viability, within reasonable limits, in spite of the absence of light, water and/or nutrients essential for the vegetative (i.e. non-seed) state. In particular, the term refers to true seeds but does not embraces plant propagules such as suckers, corms, bulbs, fruit, tubers, cuttings and cut shoots.

As used herein, the term "plant" means an entire plant or parts thereof. The term "entire plant" refers to a complete plant individual in its vegetative, i.e. non-seed stage, characterized by the presence of an arrangement of roots, shoots and foliage, depending on the developmental stage of the plant also flowers and/or fruits, all of which are physically connected to form an individual which is, under reasonable conditions, viable without the need for artificial measures. The term may also refer to an entire plant harvested as such.

The term "plant parts" refers to roots, shoots, foliage, flowers or other parts of the vegetative stage of the plant, which, when dislodged and disconnected from the rest, are incapable of survival, unless supported by artificial measures or able to re-grow the missing parts to form an entire plant. As used herein, fruits are also considered as plant parts.

As used herein, the term "root" refers to parts of a plant which are normally, in order to fulfill their physiological functions, located beneath the soil surface. Preferably, the term denotes the parts of a plant which are below the seed and have directly emerged from the latter, or from other roots, but not from shoots or foliage.

As used herein, the "shoots and foliage" of a plant are to be understood to be the shoots, stems, branches, leaves and other appendages of the stems and branches of the plant after the seed has sprouted, but not including the roots of the plant. It is preferable that the shoots and foliage of a plant be understood to be those non-root parts of the plant that have grown from the seed and are located a distance of at least one inch away from the seed from which they emerged (outside the region of the seed), and more preferably, to be the non-root parts of the plant that are at or above the surface of the soil.

As used herein, "fruits" are considered to be the parts of a plant which contain seeds and/or serve to spread seeds, and/or which may be removed from a plant without impairing its viability.

According to the present invention, the seed treatment comprises applying a pesticide selected from penflufen, fluopyram, sedaxane or penthiopyrad, preferably fluopyram to a seed. The seed may be from naturally occuring plants, from plants obtained by means of classical breeding or from genetically modified plants, for example glyphosate tolerant soybean plants.

Although the present method can be applied to a seed in any physiological state, it is preferred that the seed be in a sufficiently durable state that it incurs no significant damage during the treatment process. Typically, the seed is a seed that has been harvested from the field; removed from the plant; and/or separated from the fruit and any cob, pod, stalk, outer husk, and surrounding pulp or other non-seed plant material. The seed is preferably also biologically stable to the extent that the treatment would cause no biological damage to the seed. In one embodiment, for example, the treatment can be applied to seed that has been harvested, cleaned and dried to a moisture content below about 15% by weight. In an alternative embodiment, the seed can be one that has been dried and then primed with water and/or another material and then re-dried before or during the treatment with pesticide selected from penflufen, fluopyram, sedaxane or penthiopyrad, preferably fluopyram.

The term seed treatment comprises all suitable seed treatment and especially seed dressing techniques known in the art, such as seed coating (e.g. seed pelleting), seed dusting and seed imbibition (e.g. seed soaking). Here, "seed treatment" refers to all methods that bring seeds and the pesticide selected from penflufen, fluopyram, sedaxane or penthiopyrad, preferably fluopyram into contact with each other, and "seed dressing" to methods of seed treatment which provide the seeds with an amount of pesticide selected from penflufen, fluopyram, sedaxane or penthiopyrad, preferably fluopyram, i.e. which generate a seed comprising pesticide selected from penflufen, fluopyram, sedaxane or penthiopyrad, preferably fluopyram). In principle, the treatment can be applied to the seed at any time from the harvest of the seed to the sowing of the seed. The seed can be treated immediately before, or during, the planting of the seed, for example using the "planter's box" method. However, the treatment may also be carried out several weeks or months, for example up to 12 months, before planting the seed, for example in the form of a seed dressing treatment, without a substantially reduced efficacy being observed.

Expediently, the treatment is applied to unsown seed. As used herein, the term "unsown seed" is meant to include seed at any period from the harvest of the seed to the sowing of the seed in the ground for the purpose of germination and growth of the plant.

When it is said that unsown seed is "treated", such treatment is not meant to include those practices in which the fungicide is applied to the soil, rather than directly to the seed. Indeed, it is believed that the treatment of the soil, or more generally of the growth medium, into which the seed is sowed affords the same protecting effect on the plant that grows from the seed.

In each embodiment of the invention, it is preferred that the pesticide selected from penflufen, fluopyram, sedaxane or penthiopyrad, preferably fluopyram is applied to a seed in an effective amount, that is, an amount sufficient to provide protection against phytopathogenic fungi to the plant that grows from the seed.
Thereby, the pesticide selected from penflufen, fluopyram, sedaxane or penthiopyrad, preferably fluopyram is not only effective against seed fungi, but also against soilborne and even more surprisingly against foliar phytopathogenic fungi.

As used herein, "protection" is achieved if the percent of damage to the seed and/or the plant at 10 days after infestation (DAI) with the fungus is significantly reduced for treated seeds or plants grown from treated seeds as compared to untreated seeds or plants grown from untreated seeds. In order to be effective, the pesticide selected from penflufen, fluopyram, sedaxane or penthiopyrad, preferably fluopyram is generally employed in an amount of from 1 to 500 g/100 kg of seed, preferably in an amount of from 1 to 200g/100 kg of seed, more preferably in an amount of from1 to 50g/100 kg of seed and most preferably in an amount of from1 to 25g/100 kg of seed.

According to the present invention one purpose of said seed treatment is to control phytopathogenic fungi. Such a seed treatment thus involves a fungicidal effect or a fungicidal activity providing protection against damage done by the fungus to a plant grown from the seed. Of course, the seed treatment also provides protection against damage done by the fungus to the seed.

As used herein, the terms "fungicidal effect" and "fungicidal activity" mean any direct or indirect action on the target pathogen (which may be any fungus, but includes according to the invention rust infections on leguminous plants and their seed) that results in reduction of damage on the treated seeds and, surprisingly, also on the fruits, roots, shoots and/or foliage, in particular on the above ground part of the plants, such as fruits, shoots and in particular foliage, of plants grown from treated seeds as compared to untreated seeds or to plants grown from untreated seeds, respectively. The terms "active against a (first or second) pathogen" also have the same meaning. Such direct or indirect actions include killing of the fungal pathogen, inhibiting infestation of the fungal pathogen on the plant seeds, fruits, roots, shoots and/or foliage, and inhibiting or preventing reproduction of the fungal pathogen.

The present seed treatment can be used to control said target pests and/or to protect the seeds, roots and/or the above-ground parts of field, forage, plantation, glasshouse, orchard or vineyard crops, ornamentals, plantation or forest trees and/or any other plant(s) of interest. The seeds that are useful in the methods of the present invention can be the seeds of any plant species.
In the methods of the present invention, the seed of plant can be seed of a naturally occurring plant or a cultivated plant. The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.
Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).
Furthermore, plants are also covered that are by the use of recombinant DNA techniques capable to synthesize one or more insecticidal proteins, especially those known from the bacterial genus Bacillus, particularly from Bacillus thuringiensis, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278,
WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f.
WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).
Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesisrelated proteins" (PR proteins, see, e. g. EP-A 392 225), plant disease resistance genes (e. g. potato cultivars, which express resistance genes acting against Phytophthora infestans derived from the mexican wild potato Solanum bulbocastanum) or T4-lysozym (e. g. potato cultivars capable of synthesizing these proteins with increased resistance against bacteria such as Erwinia amylvora). The methods for producing such genetically modified plants are generally known to the person skilled in the art and are described, e. g. in the publications mentioned above.
Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.
Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).
Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

It is to be understood, however, that when the cultivated plant is a transgenic plant, the transgenic events that are present in the plant are by no means limited to those that provide for example resistance towards a specific pesticide, but can include any further transgenic event (including, but not limited to resistance against a different pesticide). In fact, the use of "stacked" transgenic events in a plant is also contemplated.
Examples of commercial available transgenic plants with two combined properties are the corn varieties "YieldGard Roundup Ready" and YieldGard Roundup Ready 2" (Monsanto) with glyphosate tolerance and resistance to corn borer; the corn variety "Agrisure CB/LL" (Syntenta) with glufosinate tolerance and corn borer resistance; the corn variety "Yield Gard VT Rootworm/RR2" with glyphosate tolerance and corn rootworm resistance; the corn variety "Yield Gard VT Triple" with glyphosate tolerance and resistance against corn rootworm and corn borer; the corn variety "Herculex I" with glufosinate tolerance and lepidopteran resistance (Cry1 F), i.e. against western bean cutworm, corn borer, black cutworm and fall armyworm; the corn variety "YieldGard Corn Rootworm/Roundup Ready 2" (Monsanto) with glyphosate tolerance and corn rootworm resistance; the corn variety "Agrisure GT/RW" (Syngenta) with gluphosinate tolerance and lepidopteran resistance (Cry3A), i.e. against western corn rootworm, northern corn rootworm and Mexican corn rootworm; the corn variety "Herculex RW" (Dow, Pioneer) with glufosinate tolerance and lepidopteran resistance (Cry34/35Ab1), i.e. against western corn rootworm, northern corn rootworm and Mexican corn rootworm; the corn variety "Yield Gard VT Rootworm/RR2" with glyphosate tolerance and corn rootworm resistance; the soybean variety "Optimum GAT" (DuPont, Pioneer) with glyphosate tolerance and ALS herbicide tolerance; the corn variety "Mavera high-value corn" with glyphosate tolerance, resistance to corn rootworm and European corn borer and high lysine trait.
Examples of commercial available transgenic plants with three traits are the corn variety "Herculex I / Roundup Ready 2" with glyphosate tolerance, gluphosinate tolerance and lepidopteran resistance (Cry1 F), i.e. against western bean cutworm, corn borer, black cutworm and fall armyworm; the corn variety "YieldGard Plus / Roundup Ready 2" (Monsanto) with glyphosate tolerance, corn rootworm resistance and corn borer resistance; the corn variety "Agrisure GT/CB/LL" (Syngenta) with tolerance to glyphosate tolerance, tolerance to gluphosinate and corn borer resistance; the corn variety "Herculex Xtra" (Dow, Pioneer) with glufosinate tolerance and lepidopteran resistance (Cry1F + Cry34/35Ab1), i.e. against western corn rootworm, northern corn rootworm, Mecxican corn rootworm, western bean cutworm, corn borer, black cutworm and fall armyworm; the corn varieties "Agrisure CB/LL/RW" (Syngenta) with glufosinate tolerance, corn borer resistance (Cry1Ab) and lepidopteran resistance (Cry3A), i.e. against western corn rootworm, northern corn rootworm and Mexican corn rootworm; the corn variety "Agrisure 3000GT" (Syngenta) with glyphosate tolerance + corn borer resistance (Cry1Ab) and lepidopteran resistance (Cry3A), i.e. against western corn rootworm, northern corn rootworm and Mexican corn rootworm. The methods of producing such transgenic plants are generally known to the person skilled in the art.

Preferably, the invention relates to a method for protecting plants after germination from the attack of foliar phytopathogenic fungi, which comprises treating the seeds of such plants with an effective amount of a pesticide selected from penflufen, fluopyram, sedaxane or penthiopyrad, preferably fluopyram, wherein the seed is of a tuberous or corn vegetable, a leafy vegetable, a leafy brassica green, a fruiting vegetable (for example cucumber, eggplant, avocado, pumpkin, tomato and cucurbit), a leguminous plant (for example beans, peas, chickpeas, lentils, soybeans and peanuts) or an oil plant (for example rape, oil-seed rape, canola, linseed, mustard, olives, sunflowers, coconut, cocoa beans, castor oil plants, oil palms) or a cereal (wheat (inclusive spelt, einkorn, emmer, kamut, durum and triticale), rye, barley, rice, wild rice, maize (corn), millet, sorghum, teff and oats, and also pseudocereals, such as amaranth, quinoa and buckwheat), cotton ? wherein seeds of plants selected from cereals, leguminous plants and oil plants are preferred.

In a more preferred embodiment, the method for protecting plants after germination from the attack of foliar phytopathogenic fungi comprises treating the cereal seed of plants with an effective amount of a pesticide selected from penflufen, fluopyram, sedaxane or penthiopyrad, preferably fluopyram, wherein the cereal seed is preferably wheat, rice, corn, rye, triticale, oats, sorghum or millet seed, more preferably barley, wheat, rice, corn, rye, triticale, most preferably barley, wheat, rice, corn, wherein seed of barley, wheat, corn is utmost preferred.

In a further more preferred embodiment, the method for protecting plants after germination from the attack of foliar phytopathogenic fungi comprises treating the seeds of leguminous plants with an effective amount of a pesticide selected from penflufen, fluopyram, sedaxane or penthiopyrad, preferably fluopyram, wherein the seed leguminous plants is preferably soybean seed.

In a further more preferred embodiment, the method for protecting plants after germination from the attack of foliar phytopathogenic fungi comprises treating the seeds of oil plants with an effective amount of a pesticide selected from penflufen, fluopyram, sedaxane or penthiopyrad, preferably fluopyram, wherein the seed of oil plant is preferably seed of oilseed rape/canola or sunflower.

The method and the use according to the invention are for protecting a plant after germination, i.e. after the hypocotyl with cotyledons or shoot has broken through the seed coat. Preferably, the method and the use according to the invention are for protecting a plant after emergence, i.e. after the coleoptil or the cotyledons or the shoot or the leaf breaks through the soil surface. Even more preferably, the method and the use according to the invention are for protecting a plant which is in the growth stage 09 (according to the BBCH extended scale; German Federal Biological Research Centre for Agriculture and Forestry; see www.bba.de/veroeff/bbch/bbcheng.pdf) or a later growth stage. The two-digit growth stages refer to the BBCH extended scale, while the one-digit growth stages are the principal growth stages. Preferably, the plant is to be protected after its emergence and before flowering (principal growth stages 0 to 5), more preferably after emergence and before inflorescence emergence (principal growth stage 0 to 4) and even more preferably after emergence and before the development of harvestable vegetative plant parts or vegetatively propagated organs/booting (principal growth stage 0 to 3).

In case the plant to be protected is a leguminous plant, in particular soybean, preferably it is to be protected when it is in the growth stage 09 to 49, more preferably in the growth stage 09 to 39, and even more preferably in the growth stage 09 to 29.
In case the plant is a cereal, in particular wheat, corn and barley, preferably it is to be protected when it is in the growth stage 09 to 60. The two-digit growth stages refer to the BBCH extended scale, while the one-digit growth stages are the principal growth stages.
In case the plant to be protected is oilseed rape/canola, preferably it is to be protected when it is in the growth stage 09 to 61, more preferably in the growth stage 09 to 55, and even more preferably in the growth stage 09 to 32.
In case the plant to be protected is sunflower, preferably it is to be protected when it is in the growth stage 09 to 61, more preferably in the growth stage 09 to 57, and even more preferably in the growth stage 09 to 35.

The target organisms for the present invention are foliar phytopathogenic fungi, i.e. fungi which attack the overground part of the plant and in particular the leaves. However, the use or the method according to the invention also provides protection from soilborne or seed pathogens. In a preferred embodiment, the present invention relates to a method for protecting plants after germination from the attack of foliar phytopathogenic fungi, which comprises treating the seeds of soybean plants with an effective amount of a pesticide selected from penflufen, fluopyram, sedaxane or penthiopyrad, preferably fluopyram, wherein, the foliar phytopathogenic fungi are *Microsphaera diffusa, Cercospora* spp. such as *Cercospora kikuchi* and *Cercospora sojina, Septoria* ssp., in particular *S*. *glycines, Colletotrichum truncatum, Phakopsora pachyrhizi* and *Phakopsora meibomiae ,* Phytophtera ssp (root infestation), Sclerotinia ssp., Macrophomina ssp. and Phialophora ssp. (root infestation).

*Phakopsora pachyrhizi* and *Phakopsora meibomiae* represent particular target pathogens of the above-referred method.

In a preferred embodiment, the present invention relates to a method for protecting plants after germination from the attack of foliar phytopathogenic fungi, which comprises treating the seeds of cereals with an effective amount of a pesticide selected from penflufen, fluopyram, sedaxane or penthiopyrad, preferably fluopyram, wherein the foliar phytopathogenic fungi are selected from *Mycosphaerella* spp., *Fusarium spp.* in particular *F. graminearum or F. culmorum,*
*Puccina recondita* (brown or leaf rust), *Blumeria* (formerly *Erysiphe*) *graminis* (powdery mildew) *Rhynchosporium secalis* (scald), *Drechslera* (syn. *Helminthosporium, teleomorph: Pyrenophora*) spp., *Exserohilum* (syn. *Helminthosporium*) spp.

In a more preferred embodiment, the present invention relates to a method for protecting plants after germination from the attack of foliar phytopathogenic fungi, which comprises treating the seeds of wheat with an effective amount of a pesticide selected from penflufen, fluopyram, sedaxane or penthiopyrad, preferably fluopyram, wherein the foliar phytopathogenic fungi are selected from *Mycosphaerella* spp., in particular *M*. *graminicola* (anamorph: *Septoria tritici, Septoria blotch*); and *Fusarium* spp. such as *F. graminearum* or *F. culmorum,* in particular *F. graminearum; Puccina recondita* (brown or leaf rust); and *Blumeria* (formerly *Erysiphe*) *graminis* (powdery mildew).

In a more preferred embodiment, the present invention relates to a method for protecting plants after germination from the attack of foliar phytopathogenic fungi, which comprises treating the seeds of barley with an effective amount of a pesticide selected from penflufen, fluopyram, sedaxane or penthiopyrad, preferably fluopyram, wherein the foliar phytopathogenic fungi are selected from *Mycosphaerella* spp., in particular *M*. *graminicola* (anamorph: *Septoria tritici, Septoria blotch*); and *Fusarium* spp. such as *F. graminearum* or *F. culmorum; Blumeria* (formerly *Erysiphe*) *graminis* (powdery mildew) *Rhynchosporium secalis* (scald), *Drechslera* (syn. Helminthosporium, teleomorph: Pyrenophora) spp., more preferably from the foliar phytopathogenic fungi are selected from *Rhynchosporium secalis* (scald); *Drechslera* (syn. *Helminthosporium, teleomorph: Pyrenophora*), *e.g. D. teres (net blotch*).

In a further, more preferred embodiment, the present invention relates to a method for protecting plants after germination from the attack of foliar phytopathogenic fungi, which comprises treating the seeds of corn with an effective amount of a pesticide selected from penflufen, fluopyram, sedaxane or penthiopyrad, preferably fluopyram, wherein the foliar phytopathogenic fungi are selected from *Exserohilum* (syn. *Helminthosporium*) spp. (e. g. *E*. *turcicum*), *Fusarium* spp. and *Cercospora* (Grey Leaf Spot).

In a further, more preferred embodiment, the present invention relates to a method for protecting plants after germination from the attack of foliar phytopathogenic fungi, which comprises treating the seeds of oilseed rape/canola with an effective amount of a pesticide selected from penflufen, fluopyram, sedaxane or penthiopyrad, preferably fluopyram, wherein the foliar phytopathogenic fungi are selected from *Sclerotinia* spp., *Verticillium* spp., *Phoma* spp., *Alternaria* spp. and *Botrytis* spp..

In a further, more preferred embodiment, the present invention relates to a method for protecting plants after germination from the attack of foliar phytopathogenic fungi, which comprises treating the seeds of sunflower with an effective amount of a pesticide selected from penflufen, fluopyram, sedaxane or penthiopyrad, preferably fluopyram, wherein the foliar phytopathogenic fungi are selected from *Sclerotinia* spp., *Phoma* spp., *Phomopsis* spp., *Alternaria* spp. and *Botrytis* spp.,

To widen the spectrum of action, penflufen, fluopyram, sedaxane or penthiopyrad, preferably fluopyram can also be employed together with other active ingredients which are useful in seed treatment, for example together with one or more insecticides, fungicides, herbicides fungicides, insecticides, growth regulators, safeners or fertilizers.
For use according to the present invention, penflufen, fluopyram, sedaxane or penthiopyrad, preferably fluopyram can be converted into the customary formulations, for example solutions, emulsions, suspensions, dusts, powders, pastes and granules. The use form depends on the particular intended purpose; in each case, it should ensure a fine and even distribution of the pesticide. Such formulations are prepared in a known manner, such as described by Mollet and Grube-mann, Formulation technology, Wiley VCH, Weinheim, 2001 or Agrow Reports " New Developments in Crop. Protection Product Formulation" by Alan Knowles, 2005.

The formulations may also comprise auxiliaries which are customary in agro-chemical formulations. Examples for suitable auxiliaries are solvents, liquid and solid carriers or fillers, surfactants (e.g. as dispersants, emulsifiers, wetters, solubilizers, protective colloids, adhesion agents), thickeners, biocides, anti-freezing agents, anti-foaming agents, agents for adjusting the pH, anticaking agents, stickers or colorants.

Suitable solvents and liquid carriers are water and organic solvents, such as mineral oil fractions of medium to high boiling point, e.g. kerosene, diesel oil, oils of vegetable or animal origin, aliphatic, cyclic and aromatic hydrocarbons, e. g. toluene, xylene, paraffin, tetrahydronaphthalene, alkylated naphthalenes, alcohols e.g. ethanol, propanol, butanol, benzylalcohol, cyclo¬hexanol, glycols, DMSO, ketones, e.g. cyclohexanone, esters, e.g. lactates, carbonates, fatty acid esters, gamma-butyrolactone, fatty acids, phosphonates, amines, amides, e.g. N-methylpyrrolidone, fatty acid dimethylamides, and mixtures thereof.

Suitable solid carriers are mineral earths, e.g. silicates, e.g. mica, silica gels, talc, kaolins, limestone, lime, chalk, clays, dolomite, diatomaceous earth, bentonite, calcium sulfate, magnesium sulfate, magnesium oxide, polysaccharide powders, e.g. cellulose, starch, fertilizers, e.g. ammonium sulfate, ammonium phosphate, ammonium nitrate, ureas, products of vegetable origin, e.g. ce-real meal, tree bark meal, wood meal and nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, or adjuvant. Examples of surfactants are listed in McCutcheon's, Vol.1: Emulsifiers & Detergents, McCutcheon's Directories, Glen Rock, USA, 2008 (International Ed. Or North American Ed.).

Suitable anionic surfactants are alkali, alkaline earth or ammonium salts of sulfonates, sul-fates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl¬naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates and carboxylated alcohol or alkylphenol ethoxylates.

Suitable nonionic surfactants are alkoxylates, N-subsituted fatty acid amides, amine oxides, esters, sugar-based surfactants, polymers, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymers are homo- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable thickeners are polysaccharides (e.g. xanthan gum, carboxymethylcellulose), inorganic clays (organically modified or unmodified), polycarboxylates, and silicates.

Suitable biocides are bronopol and isothiazolinone derivatives such as alkylisothiazoli-nones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Formulation types, which are especially useful for seed treatment are including, but not limited to soluble concentrates (LS), emulsions (ES), suspensions (FS), -water-dispersible powders and water-soluble powders (WS), dustable powders (DS), and suspoemulsions (SE).

The amount of pesticide in the formulation depends on the formulation type. Principally, the agrochemical formulations generally comprise between 0.01 and 95%, preferably between 0.1 and 90%, most preferably between 0.5 and 90%, by weight of the pesticide.

For example, in the liquid fomulations (as set forth above), the amount of the at least one pesticide is usually in the range from 2 to 70% by weight, in particular from 2 to 60% by weight

In the solid formulations (as set forth above), the amount of the at least one pesticide is usually in the range from 10 to 70% by weight, in particular in the range from 15 to 50% by weight, based on the total weight of the solid formulation.

The total amount of further formulation auxiliaries depends on the type of formulation used. Generally, it varies from 0.1 to 90% by weight based on the total weight of the formulation.

In particular, the amount of surfactants varies depending on the formulation type. Usually, it is in the range from 0.1 to 20% by weight, in particular from 0,2 to 15% by weight and particularly preferably from 0,5 to 10% by weight based on the total weight of the formulation.

The amount of carriers and solvents varies depending on the formulation type. Usually, the solvent is present in an amount to add 100 by weight of the total formulaion, for example it is in the range from 1 to 90 % by weight, in particular from 10 to 60 % by weight and particularly preferably from 15 to 50 % by weight based on the total weight of the formulation.

The amount of stickers will usually not exceed 40% by weight of the formulation and preferably ranges from 1 to 40% by weight, and in particular in the range from 5 to 30% by weight, based on the total weight of the formulation.

The amount of the remaining formulation auxiliaries (thickeners, anti-foam agents, anti-freeze agents, agents for adjusting the pH, anticaking agents and biocides (preservatives), colorants, fillers) varies depending on the formulation type. Usually, it is in the range from 0,1 to 60 % by weight, in particular from 0,5 to 40 % by weight and particularly preferably from 1 to 20 % by weight based on the total weight of the formulation.
For example, the content of antifoams or biocides is as a rule below 1% by weight.

These compositions can be applied to seeds diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the respective pesticide or their formulations, are applied on to the plant propagation material by a method such that germination is not induced, e. g. by seed dressing, pelleting, coating and dusting.

All embodiments of the above-referred methods are herein also referred to as "methods of the present invention".

The present invention also relates to a method for protecting plants after germination from the attack of foliar phytopathogenic fungi, which comprises treating the seeds of such plants with an effective amount of a pesticide selected from fluxapyroxad. This method can carried out under the same conditions and preferences as set forth for the methods of the present invention.

The invention is further illustrated, but not limited by the following examples.

### Examples

### Example 1 - Soybean Seed Treatment

Seeds of soy bean were treated in a batch treater as standard equipment. After been treated and dried the seeds were planted at the same day under field conditions. Infection with Phakopsora pachyrhizi occurred naturally. The infection of the plants were determined 45 days after seeding (GS 15).
The dosage rates used and the obtained results are shown below:

| Active compound (ai content) / formulation type | Concentration (g a.i./100 kg Seeds) | Disease % |
|---|---|---|
| Untreated Control | - | 20 |
| Fluopyram (100 gai/l) / FS | 50 | 10 |
| Penflufen (100 gai/l) / FS | 50 | 13 |
| Penthiopyrad (100 gai/l) / FS | 50 | 15 |
| Sedaxane (100 gai/l) / FS | 50 | 16 |

### Example 2 - Barley Seed Treatment

Seeds of winter barley were treated in a batch treater as standard equipment. After been treated and dried the seeds were planted at the same day under field conditions. Infection with Pyrenophora teres occurred naturally. The infection of the plants were determined 80 days after seeding (GS 58).
The dosage rates used and the obtained results are shown below:

| Active compound | Concentration (g a.i./100 kg Seeds) | Disease % |
|---|---|---|
| Untreated Control | - | 64 |
| Fluopyram (100 gai/l) / FS | 50 | 15 |
| Penflufen (100 gai/l) / FS | 50 | 42 |
| Penthiopyrad (100 gai/l) / FS | 50 | 36 |

### Example 3 - Wheat Seed Treatment

Seeds of winter wheat were treated in a batch treater as standard equipment. After been treated and dried the seeds were planted at the same day under field conditions. Infection with Puccinia striiformis occurred naturally. The infection of the plants were determined 90 days after seeding (GS 49).
The dosage rates used and the obtained results are shown below:

| Active compound | Concentration (g a.i./100 kg Seeds) | Disease % |
|---|---|---|
| Untreated Control | - | 35 |
| Fluopyram (100 gai/l) / FS | 50 | 17 |
| Penflufen (100 gai/l) / FS | 50 | 35 |
| Penthiopyrad (100 gai/l) / FS | 50 | 28 |

## Claims

1. A method for protecting plants after germination from the attack of foliar phytopathogenic fungi, which comprises treating the seeds of such plants with an effective amount of a pesticide selected from penflufen, fluopyram, sedaxane or penthiopyrad.

2. The method according to claim 1, wherein the pesticide is fluopyram.

3. The method according to claim 1 or 2, wherein the seed is cereal seed.

4. The method according to claim 3, wherein the seed is wheat seed.

5. The method according to claim 3, wherein the seed is barley seed.

6. The method according to claim 3, wherein the seed is corn.

7. The method according to claim 1 or 2, wherein the seed is soybean seed.

8. The method according to claim 1 or 2, wherein the seed is rapeseed / canola seed.

9. The method according to claim 1 or 2, wherein the seed is sunflower seed.

10. The method according to claim 3, wherein the plants are protected from attack of at least one of the following phytopathogenic fungi: *Mycosphaerella* spp., *Fusarium ssp., Puccina recondita, Blumeria* (formerly *Erysiphe*) *graminis* and *Rhynchosporium secalis.*

11. The method according to claim 7, wherein the plants are protected from attack of at least one of the following fungi: Phakopsora ssp., Cercospora ssp., Phytophtera ssp. Sclerotinia spp., Macrophomina spp. and Phialophora spp. Fusarium spp. ?

12. The method according to claim 8, wherein the plants are protected from attack of at least one of the following phytopathogenic fungi: *Sclerotinia* ssp., *Verticillium* ssp., *Phoma* ssp., *Alternaria* ssp. and *Botrytis* ssp..

13. The method according to claim 9, wherein the plants are protected from attack of at least one of the following phytopathogenic fungi: *Sclerotinia* ssp., *Phoma* ssp., *Phomopsis* ssp., *Alternaria* ssp. and *Botrytis* ssp..

14. The method according to any one of claims 1 to 13, wherein the effective amount is from 1 to 500 g pesticide/100kg of seed.

15. The method according to any one of claims 1 to 14, for protecting plants which are in the growth stage BBCH 09 or higher from the attack of foliar phytopathogenic fungi.
